# EUROPEAN PATENT SPECIFICATION

(11) **EP 1 461 199 B1**
(45) Date of publication and mention of the grant of the patent: **14.12.2005**
(21) Application number: 01994958.5
(22) Date of filing: 27.12.2001
(51) Int. Cl.: B29D 30/10, B29D 30/38

(54) **Method of forming a pneumatic tyre for vehicles and tyre obtained thereby.**
Verfahren zum Aufbauen eines Fahrzeugluftreifens und damit hergestellter Reifen.
Procédé de réalisation d'un pneumatique pour vehicule et pneumatique ainsi obtenu.

(43) Date of publication of application: 29.09.2004
(73) Proprietor: Pirelli Pneumatici S.p.A., 20126 Milano (IT)
(72) Inventor: CARETTA, Renato, I-21013 Gallarate (IT); DE GESE, Ignazio, I-20099 Sesto San Giovanni (IT); LO PRESTI, Gaetano, I-20099 Sesto San Giovanni (IT); NOTO, Rodolfo, I-20064 Gorgonzola (IT)
(74) Representative: Giannesi, Pier Giovanni
(86) International application number: PCT/IT2001/000656
(87) International publication number: WO 2003/061953

(56) References cited:
- EP-A- 0 557 615
- EP-A- 0 780 221
- FR-A- 509 827
- GB-A- 987 983
- US-A- 1 193 715
- US-A- 1 728 957

## Description

The present invention relates to a method for forming a tyre for vehicle wheels and the tyre constructed using the abovementioned method.

A tyre for vehicle wheels normally comprises a carcass structure essentially composed of one or more carcass plies formed in a substantially toroidal configuration and having their axially facing lateral edges engaged with respective, circumferentially inextensible, annular reinforcing structures usually called "bead wires". Each annular reinforcing structure is incorporated in a so-called "bead" defined along an inner circumferential edge of the tyre for securing the latter on a corresponding mounting rim.

A belt structure may be applied onto the carcass structure, in a radially external position, said belt structure comprising one or more belt strips formed in a closed loop and essentially composed of textile or metal cords which are incorporated in a layer of elastomeric material, are parallel to each other and suitably oriented with respect to the cords of the adjacent carcass plies and/or belt strips.

A tread band is also applied in a position radially outside the belt structure, said band normally consisting of a strip of elastomeric material of suitable thickness.

It must be pointed out that, for the purposes of the present description, the term "elastomeric material" is understood as referring to a composition comprising at least one elastomeric polymer and at least one reinforcing filler, and optionally additives of various types (for example cross-linking agents, plasticizers and other additives known in the art).

A pair of sidewalls is provided on the opposite sides of the tyre, each of said walls lining a side portion of the tyre lying between a so-called shoulder zone, located in the vicinity of the respective lateral edge of the tread band, and the respective bead.

In the less recently developed manufacturing processes, the formation of each carcass ply is performed by means of the manufacture of a rubberized fabric comprising a plurality of elongated reinforcing elements incorporated in a layer of elastomeric material and parallel to each other - referred to below as "cords" - this term defining both individual basic threads (single filaments, floss, yarns, metal wires) and actual cords, i.e. a structure comprising one or more strands twisted together, each consisting of a certain number of basic threads twisted together. Said rubberized fabric is manufactured, for example, by means of a calendering operation which encloses in sandwich fashion a plurality of said coplanar cords arranged alongside each other between two layers of elastomeric material. The threads of said cords may consist alternatively of metal alloys such as steel, textile fibres, carbon fibres, glass fibre, Kevlar® or other fibres having a strength suitable for use in the construction of a tyre.

Each carcass ply is then assembled with the other components of the tyre, such as for example the abovementioned bead wires, on a so-called cylindrical preparation drum. The carcass ply is then folded back around said bead wires so that when the entire carcass structure, which is initially made in the form of a cylindrical sleeve, is formed in a toroidal configuration, carcass ply and bead wires remain associated with each other, with the carcass ply folded back around the abovementioned bead wires, extending from the inside towards the outside both axially and radially.

In a subsequent operation other components of the tyre, such as the belt structure, the sidewalls and the tread band, are then assembled (for example using a forming drum) on the said carcass structure.

According to the latest production methods, the carcass ply or plies is/are obtained by laying a plurality of strip-like elements or band-like portions, one after another, in a circumferentially adjacent arrangement, on a toroidal support shaped in accordance with the internal form of the tyre to be obtained. A method of this kind allows the elimination, or at least limitation of production of intermediate semi-finished products for the purposes of preparation of the tyres and is described, for example, in European patent application published under No. 0 928 680, in the name of the same Applicant.

Each of the abovementioned strip-like elements, referred to below simply as "band", is manufactured by combining a plurality of coplanar and mutually parallel cords with an extruded elastomeric material by means of a drawing operation. The band thus produced contains a certain number of cords per centimetre of its transverse dimension, and said number identifies the "density" of the cords.

With reference to the laying of each band on said toroidal support, it is pointed out here that the diameter in the crown zone is greater than the diameter at the beads and this condition is all the more accentuated in the toroidal supports suitable for the manufacture of tyres for heavy vehicles such as lorries, articulated vehicles and the like. As a result of this particular geometry, the laying of a plurality of bands circumferentially adjacent to one another in the crown zone of the carcass produces in the bead zone an overlapping of the ends of the bands.

The Applicant has ascertained that a tyre manufactured as described above has beads with a structure which is not reinforced by the abovementioned overlapping arrangement, as one might be led to believe, but which is weakened. According to the alternative viewpoint of the Applicant, in the tyre in the working condition, the cords overlapped with each other do not function correctly and in a uniform manner, with the result that some of them are greatly subject to tensile stresses and others to compressive stresses, with the start of separation between elastomeric material and reinforcing cords and consequent shorter duration of the tyre itself.

Moreover, the experiments conducted by the Applicant have shown that the manufacture of the carcass structure must be performed substantially without air being trapped inside. The formation of air traps occurs, for example, when the carcass is formed by laying on the surface of the support a single rubber-coated thread in a plurality of circumferentially adjacent turns; in this case, the resultant carcass ply does not consist of a compact layer and incorporation of air inside the said structure is much more likely. In fact, the laying of several rubber-coated threads alongside each other leaves, in a position radially inside each pair of adjacent threads, an air bubble which, expanding during the subsequent tyre vulcanization step, leads to the start of separation between elastomeric material and cords, which in a short period of time results in the tyre becoming unusable. US 1,193,715 discloses a production of fabric particularly intended for use in connection with automobile tyres. More particularly it shows the manufacturing of a fabric treated with rubber in which the strands or threads are disposed during its use in tyre manufacturing in lines converging toward the inner periphery of the tyre being manufactured.

The document US 1,453,865 relates to a method for the construction of tyres for vehicle wheels, whereby said tyre comprises "an elastic carcass which forms the external portion and the tread of the tyre and which encloses an internal air chamber", said tyre "having a fabric of the internal body or carcass formed by cords or filaments". The constructional method comprises "the laying of a plurality of cord strip units, each consisting of a plurality of cord portions joined together laterally with each other", said laying operation occurring by keeping the strip units "in contact over the whole of their length on a drum or spindle, in successive positions and in contact with each other, so that the plurality of the respective multiple cord strip units will cover entirely the surface area of the drum, securing the ends of said strip units to the edge of the bead".

The document US 1,728,957 in the name of the same inventor illustrates essentially a machine for the construction of a tyre manufactured according to the method described above.

It should be noted that in both the documents mentioned above oblique laying of each cord or group of cords suitable only for carcasses of tyres known as "cross-carcass" tyres is described. Securing of the ends of the cords to the underlying drum is performed by ovalizing the (circular) cross section of each cord so as to arrange said cords in the same plane. In fact, as is clearly illustrated in the figures of the abovementioned documents, the carcass plies consist of rubber-coated threads simply arranged adjacent to each other on the crown and pressed against one another on the beads. This solution is possible because said cords are textile cords and are therefore deformable; their circular cross section on the crown therefore becomes elliptical at the ends, as a result of which it is possible to maintain a coplanar lie of the abovementioned cords, with an obvious increase in density. In this way, however, the carcasses thus constructed are not excessively robust and may be used only in motor car tyres. In tyres for

heavy vehicles, the carcass must be much stronger in order to be able to withstand the greater load conditions; it is therefore preferable to use metal cords, which cannot be used with the abovementioned method.

The document EP 0 780 221 illustrates a method and an apparatus for manufacturing a band provided with reinforcing cords, in order to form a carcass ply which is folded back onto itself in the bead zone and radially extended outwards along the sidewall of the tyre, having an increased density in the region of the beads. In order to implement said method, each cord is inserted into a special groove of a plate which is suitably shaped with grooves of different length; then, by means of a pressing operation, two strips of elastomeric material enclose in sandwich fashion the cords inserted in said plate. The band obtained has a maximum transverse dimension in the centre and minimum transverse dimension in intermediate zones symmetrical with respect to the centre and located between said centre and the ends. Correspondingly, the density of the cords is minimal in the centre and maximum in the aforementioned intermediate zones, then diminishing towards the end portions.

It should be noted that, in the green tyre obtained from similar strips of elastomeric material, the cords have a length different from each other as regards construction: the behaviour of the tyre obtained from their assembly on said toroidal support is negatively influenced on account of a lack of structural uniformity. The shorter cord will in fact be subject, in any case, to a greater tensile stress.

Moreover, it should be noted that, for each different tyre size, it will be necessary to provide a special-purpose apparatus when using the abovementioned method: in fact, it will be necessary to have several plates which are differently grooved, so as to allow the manufacture of bands with different formats, suitable for application on drums of varying dimensions. Thus also, if, for technical reasons, it is required to vary the density of the cords on the same tyre model, plates with the same dimensions, but with a number of different grooves, must be provided.

The Applicant has found that by forming a tyre using the abovementioned band laying technique, by subjecting said bands to subsequent constriction of the end zones prior to their positioning one after another, in a circumferentially adjacent arrangement, on a toroidal support shaped in accordance with the internal form of the tyre to be obtained, a carcass structure which Is homogeneous and uniform, without overlapping of cords at the beads, and substantially devoid of air bubbles inside it, is obtained.

The Applicant has found, moreover, that a tyre having a carcass ply formed by means of bands which have undergone constriction at their ends, so as to have a different density of the reinforcing cords between crown zone and bead zone without overlapping of said cords in the bead zone, has a uniform and homogeneous structure which solves, or at least minimizes, the problems of the prior art mentioned above.

The tyre therefore has, with regard to that described above, a greater robustness in the carcass structure and in particular at the beads.

In short, with the solution obtained by the Applicant, in the beads there is an adjacent arrangement of band portions having a smaller overall transverse dimension compared to the maximum transverse dimension on the crown, which adjacent arrangement will therefore not cause overlapping of bands, and therefore cords, despite the smaller diametral dimensions at the beads.

According to a first aspect thereof, the invention relates to a method for forming a tyre for vehicle wheels according to claim 1.

Advantageously the method in question envisages that said constriction should be a constant-volume mechanical constriction.

In a preferred embodiment of the abovementioned method, during said constriction step, the shape of the cross section of each elongated element remains unvaried.

In a further preferred embodiment of said method, during said constriction step, the cross sections of the end zones of each strip-like element undergo a reduction in their base and an increase in their height, so that overall the area of the said cross sections remains constant.

Advantageously, in the method in question said strip-like elements are manufactured by means of extrusion.

In a different embodiment of the method according to the invention, said strip-like elements envisage 2 to 6 elongated elements arranged parallel to each other in the longitudinal direction of said strip-like elements.

Advantageously, in the abovementioned method, the ratio K between the length of said base and said height of said strip-like element in the portion not subjected to said constriction operation is greater than 1.5. in a preferred embodiment of the method in question, the rubberization thickness of each elongated element contained in said strip-like element is between 0.05 mm and 1.5 mm.

According to a further aspect thereof, the invention relates to a tyre for vehicle wheels according to claim 9.

In a preferred embodiment, the tyre for vehicle wheels according to the invention envisages that said elongated elements comprise a metal cord with the form 7x4x0.175W.

Further characteristic features and advantages of the invention will emerge more clearly from the detailed description of a preferred, but not exclusive embodiment of a method for forming a tyre for vehicle wheels and a tyre obtained by said method, in accordance with the present invention.

This description will be illustrated hereinbelow with reference to the attached drawings which are provided solely by way of a non-limiting example and in which:
- Figure 1 is a schematic cross-sectional view of an green tyre manufactured by means of the method according to the invention;
- Figure 2 is a cross-sectional view of a circumferential portion of a carcass ply along the line II-II of Figure 1;
- Figure 3 is a cross-sectional view of the same circumferential portion of carcass ply illustrated in Figure 2, along the line III-III in Figure 1;
- Figure 4 is a cross-sectional view of a portion of band which has not yet been subject to constriction;
- Figure 5 is a plan view of a band following constriction of its end zones;
- Figure 6 is a cross-sectional view of a band at the start of the constriction step;
- Figure 7 is a cross-sectional view of the element in Figure 6 at the end of the constriction step.

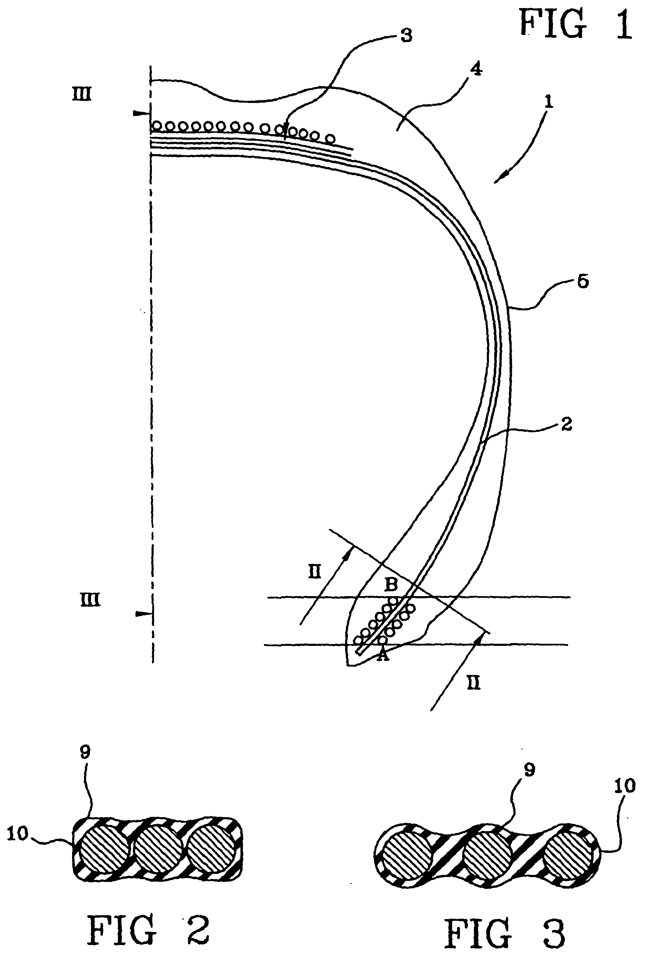

With reference to Figure 1, a tyre for vehicle wheels manufactured with the method according to the invention is identified by the reference number 1.

This tyre 1 essentially comprises a carcass structure having at least one carcass ply 2 which has a toroidal shape and is associated by means of its circumferential edges with a pair of annular reinforcing structures, or bead wires, each of which is positioned in the finished tyre in a zone - usually called "bead" - which ensures engagement of the tyre with its mounting rim. A belt structure 3 is provided in a position radially on the outside of the abovementioned carcass ply 2, said belt structure comprising one or more belt strips arranged on top of each other. A tread band 4 is superimposed in a position radially on the outside of the abovementioned belt structure: in the vulcanized tyre, this band has a suitable tread pattern (not shown) moulded during the vulcanization process; finally, a pair of sidewalls 5 is provided laterally on the opposite sides of the abovementioned carcass structure.

The carcass structure is preferably lined radially inside with a layer of elastomeric material which is called "liner" in order to ensure an airtight seal of the tyre during use.

The assembly of the abovementioned parts is performed as substantially illustrated in the already cited document EP 0 928 680 in the name of the same Applicant. In short, a limited number of semi-finished products such as strips of elastomeric material, bands of elastomeric material reinforced with textile or metal cords, and metal wires, generally made of steel and also lined with an elastomeric material, are fed onto a toroidal support having the configuration of the internal walls of the tyre which is to be made. Said support is placed in motion, preferably by means of a robotized system, so as to pass through a plurality of stations in each of which a particular step for preparation of the tyre is performed, by means of automated sequences. The entire structure of the tyre 1 described above is thus formed by means of superimposition on top of the abovementioned toroidal support, thus resulting in an green tyre ready for vulcanization.

More precisely, in accordance with the invention, initially the so-called liner is laid on a toroidal support, the external profile of which coincides with that of the radially internal surface of the green tyre, said liner consisting essentially of a sheet of rubber which in the vulcanized tyre forms the internal airtight surface of the tyre.

Prior to manufacture of the carcass ply, one or more elastomeric filling elements are laid on said toroidal support, which filling elements may have a form radially tapered towards the outside within the cross section of the tyre 1.

Manufacture of the said tyre 1 continues with laying, on the said toroidal support, of a pair of annular reinforcing structures in a position radially on the inside of said elastomeric filling element.

More precisely, each annular reinforcing structure, which is circumferentially inextensible, comprises a set of wound turns of metal wire which are radially superimposed and arranged axially alongside each other.

The set of wound turns may be prepared by winding around said preparation support a plurality of turns, radially superimposed on each other and arranged axially alongside each other, of a metal wire or, alternatively, of a cord consisting of metal wires, or of a band of said wires or cords, or also of a flat metal strip.

The material used for said annular reinforcing structure may be any type of textile or metallic or other kind of material having suitable mechanical strength characteristics; preferably, this material consists of normal or high tensile steel wire (i.e. with a high carbon content) which is commonly used in tyre manufacturing technology, or a metal cord with a corresponding strength and load capacity.

Following laying of the abovementioned annular reinforcing structure, laying of one or more carcass plies 2 is started so as to form the carcass structure of the tyre according to the invention.

The description refers, without intending to be limiting in any way, to the preparation of a tyre for heavy vehicles such as lorries, articulated vehicles, buses and the like, with the result that the method according to the invention advantageously envisages for the abovementioned carcass ply the manufacture and the use of bands of elastomeric material reinforced with metal cords. In the case of tyres of another type (for example for cars) the reinforcing cords of the abovementioned band are preferably textile cords consisting of a natural or synthetic fibre (cotton, polyamide, polyester) and typically made of nylon or rayon.

Said band 6 is prepared using preferably 2 to 6 metal cords 7 passed through a drawing head which lines them with a suitable elastomeric material, creating a continuous strip-like element in which said cords are parallel to each other in the longitudinal direction of the element itself.

The diameter of the metal wire used for manufacture of said cords may be between 0.12 and 0.4 mm, preferably between 0.14 and 0.23 mm, while the abovementioned cords are preferably made with a braided structure, for example with the configurations 3+9×0.22W and 3+9+15×0.175W. Finally, it was considered particularly convenient to use the cord with a configuration 7×4×0.175W, or comprising 7 strands, each composed of 4 basic steel filaments with a diameter of 0.175 mm wound with a braiding spiralled around the cord and consisting of a steel wire with a diameter of 0.15 mm.

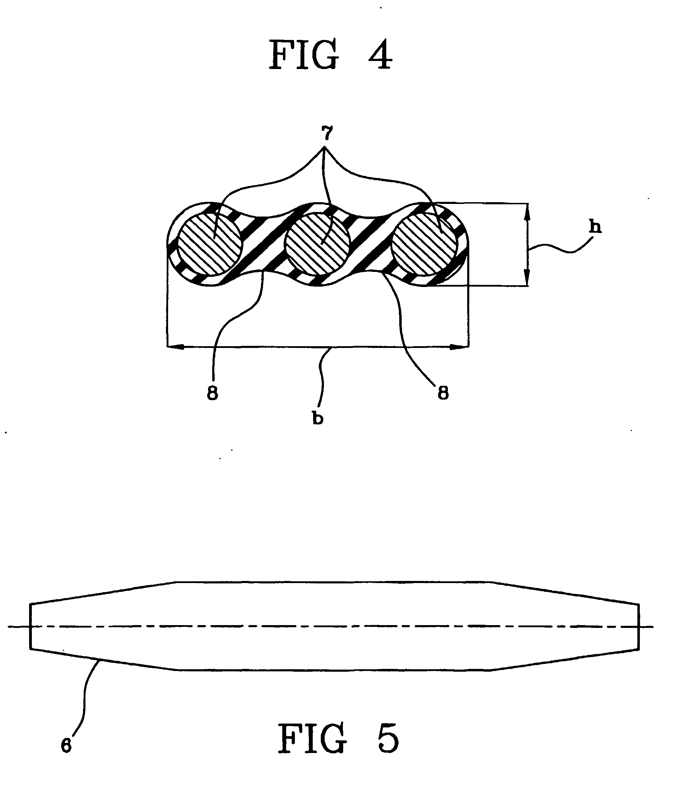

The abovementioned continuous strip-like element from which the bands 6 will be obtained has a cross section which is substantially rectangular (Fig. 4) with a base "b" and a height "h". In the case shown in Figure 4 relating to a band with three reinforcing cords, said base b has a dimension of about 5.3 mm and a height h of 1.8 mm; in any case, preferably, said values respectively range between 5 and 12 mm as regards the base b and between 1.8 and 2.2 mm as regards the height h. It is obvious that, with a variation in the number of cords included within the band 6, the dimension b varies proportionally with respect to this number.

Said bases b of the band also have a surface which is undulated with a plurality of depressions 8 created by the uniformity of the rubberization thickness of the cords and necessary for allowing constant-volume constriction, as will be better illustrated below.

Characteristic parameters of the abovementioned band 6 are the rubberization thickness, or the radial thickness on each cord of elastomeric material, ranging between 0.05 and 1.5 mm (inclusive), and a value of the ratio K between the dimension of the base b and that of the height h of the band itself, which is greater than 1.5.

The continuous strip-like element thus formed is not directly used - duly cut to size into bands 6 - for application onto said toroidal support in order to form said carcass ply 2, but, according to the invention, undergoes a constriction at intervals, along its longitudinal extension, which locally modifies the profile of its cross section and the density of the cords.

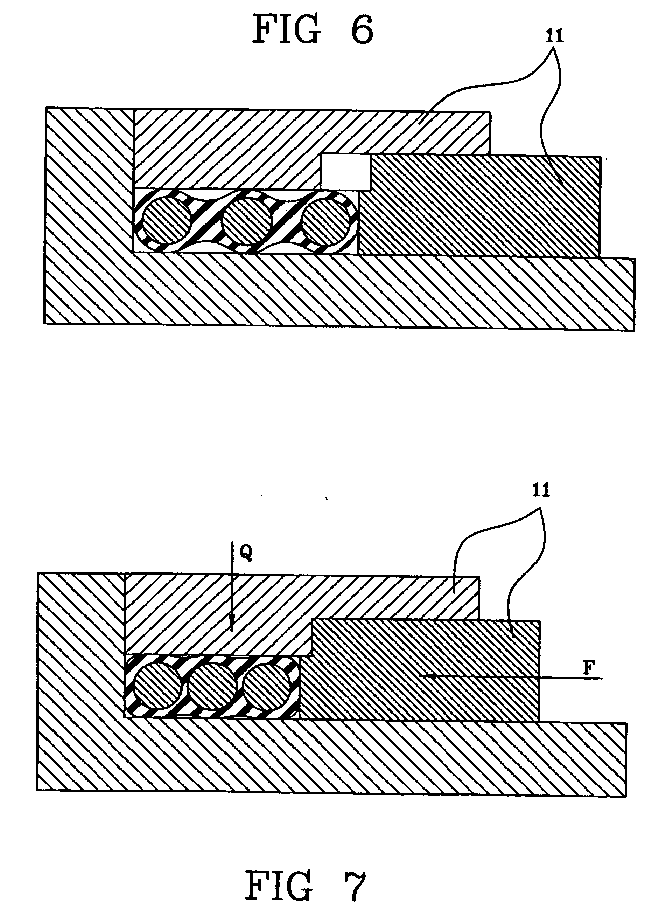

More precisely, as schematically shown in Figures 7 and 8, the end portion of the continuous strip-like element which will form the band 6, by being cut to size, is placed between pressing members 11 which act in a manner substantially perpendicular to each other, exerting on the cross section of said element a force "Q" perpendicular to the abovementioned base b and a force "F" perpendicular to the abovementioned height h.

During the abovementioned constriction step, the elastomeric material is compressed in the axial direction and expands in the radial direction, with respect to the transverse direction of said element, so that the depressions 8 are substantially flattened and the cross section of the end zones of the future band 6 consequently assumes the form of a more regular rectangle, in which the value of said ratio K becomes less than the initial value and, at the same time, the density value of the cords 7 increases, although the form of the cross section of each cord 7 remains constant.

It should be noted that, during said constriction step, the air present in the depressions 8 along the surfaces of said pressing members 11 may leave said depressions 8, for example escaping in the longitudinal direction along said strip-like element, away from said members.

After the constriction step, the height h for a continuous strip-like element comprising three cords preferably has values of between about 3.6 and 4.4 mm (inclusive), the base b preferably has values of between about 2.5 and 6 mm (inclusive) and the density preferably has values of between about 5 and 12 cords/cm (inclusive). The density in the band zone which has not undergone constriction has values of between about 2.5 and 6 cords/cm (inclusive).

Advantageously, the area of each cross section along the extension of each end zone of each band 6 which has undergone constriction remains constant: we shall define the abovementioned constriction as a constant-volume mechanical constriction.

Driving members - not shown - drive forwards the end portion of the abovementioned element which has undergone constriction and bring a following portion into position for constriction. Once it has undergone this constriction as well, cutting members - also not shown - cut the band 6 to the size required for its use in the carcass structure of the tyre (Figure 5). The band is then removed by gripping members (not shown) for the manufacture, as will be illustrated more clearly below, of said carcass ply 2, while the driving members convey another continuous strip-like element portion into position for undergoing the same constriction.

During the manufacture of the abovementioned carcass ply 2, gripping members of the same type as those described, for example, in the European patent application published under No. 0 928 680 arrange each band 6 on said toroidal support in a substantially U-shaped form around the profile of the cross section of said support so as to define two lateral portions which extend substantially in planes perpendicular to the geometrical axis of rotation of the same support, in positions axially spaced from each other, and a crown portion extending in a radially external position between said lateral portions.

Preferably, the cords 7 of each band 6 are arranged radially, i.e. at 90°, with respect to the circumferential direction of the toroidal support.

The bands 6 adhere to the underlying layers along the whole of their longitudinal extension, extending from bead to bead along the external surface of the toroidal support, since the latter is preferably lined with an adhesive material, for example the abovementioned liner.

Said bands 6 are arranged side-by-side with respect to each other along the circumferential extension of the abovementioned toroidal support and, as a result of the constriction exerted on the end zones of the band, which ensures that the circumferential extension on the crown is equal to the circumferential extension at the beads, said side-by-side arrangement is maintained along the whole linear extension, from bead to bead.

Said arrangement may be achieved by means of a single rotation of the toroidal support with the continuous adjacent positioning of each band with respect to the preceding one, or preferably by means of two or more rotations of the same support. In this latter case the laying of each band 6 is followed by a rotation of the support corresponding to a multiple of the circumferential space occupied by each band, so as to allow, upon the following rotation, the laying of another series of bands, until the entire toroidal surface is completely covered: at this point the carcass ply 2 has been completed.

The carcass ply 2 is arranged as shown in Figures 1, 2 and 3, in which it can be seen that the central part of each band 6 which has not undergone constriction has been laid on the crown, where the diameter of the toroidal support is greater, whereas all the end portions of the said bands which have undergone constriction are arranged adjacent to each other in the bead zone, where the diameter is smaller. In this way the density of the cords 7 increases with regularity and continuity from the crown zone of the tyre to the beads; in fact, owing to the constriction of the end zones of each band 6, the need for overlapping of the latter is eliminated.

Finally, it should be noted that the end of the carcass ply or carcass plies 2 is not folded back around the bead wires. In particular, considering the cross section of the tyre 1 (Figure 1) and the respectively radially innermost and radially outermost points A and B of each annular reinforcing structure, it can be seen that the profile of the carcass ply 2 crosses at the most once both the straight lines parallel to the axis of rotation of the tyre 1 and passing through the abovementioned points A and B. In practice, inside the beads of the tyre 1, the zone of the annular reinforcing structure may be passed through partly or completely once by the carcass ply 2, and if the carcass ply 2 extends radially inwards beyond this limit, it is not folded back around the annular reinforcing structure and at the most extends in an axial direction towards the end of said structure, passing close to the radially internal surface thereof.

The structure of the tyre is completed, finally, with the laying of the belt structure 3, the sidewalls 5 and a tread band 4 and is then moulded and vulcanized.

In this way the technical problems previously described have been overcome. In fact, a carcass ply which is substantially uniform and homogeneous is obtained, without overlapping of the ends of the bands 6 and consequently without overlapping of the cords 7, therefore preventing the abovementioned cords from being subject to loads of a tensile or compressive nature and of varying values, causing, during use, separation of cords and elastomeric material with a consequent short working life of the tyre.

Moreover the use of bands for the construction of the carcass ply eliminates the possibility of air remaining trapped between the liner and the facing surface of the band: the problem is of particular importance when, as in the prior art, instead of the band a single rubber-coated metal wire is used, since the mutual arrangement of the wires, which does not require constriction at the beads, may result in the incorporation of air between the internal surface of said wires and the facing surface of the liner.

Finally, the apparatus for forming the bands 6 thus obtained may be adapted with a great degree of flexibility to the manufacture of bands for tyres having dimensions which may vary even considerably from one another, with minimum adjustments or adaptations (number of cords per band, ratio K, band length, longitudinal distance between the end portions of said band, which have undergone constriction), without requiring changeover of the apparatus for the introduction of special-purpose devices suitable for the manufacture of bands intended for a single tyre size, as in the already mentioned document EP 0 780 221.

## Claims

1. Method for forming a tyre for vehicle wheels, said tyre (1) comprising a carcass structure, an annular reinforcing structure associated with said carcass structure, a tread band (4) in a position radially outside said carcass structure, and a pair of sidewalls (5) in axially opposite positions on said carcass structure, where the manufacture of said carcass structure comprises at least the steps of: preparing a plurality of strip-like elements (6) each comprising one or more elongated elements (7) at least partially lined with at least one layer of elastomeric material, laying each strip-like element (6) on a toroidal support in a substantially U-shaped configuration around the profile of the cross section of said toroidal support in order to define two lateral portions which extend substantially in planes perpendicular to the geometrical axis of rotation of said toroidal support in positions spaced from each other in the axial direction, and a crown portion which extends in a radially external position between said lateral portions, said crown portions of each strip-like element (6) being arranged side-by-side with respect to each other along the circumferential extension of the toroidal support, **characterized in that** it envisages a step involving constriction of the end zones of each strip-like element (6), prior to laying thereof on said toroidal support so that said side-by-side arrangement is maintained along the whole linear extension from bead to bead.

2. Method for forming a tyre for vehicle wheels according to Claim 1, **characterized in that** said constriction is a constant-volume mechanical constriction.

3. Method for forming a tyre for vehicle wheels according to Claim 1. **characterized in that**, during said constriction step, the shape of the cross section of each elongated element (7) remains unvaried.

4. Method for forming a tyre for vehicle wheels according to Claim 2, **characterized in that**, during said constriction step, the cross sections of the end zones of each strip-like element (6) undergo a reduction in their base (b) and an increase in their height (h), so that overall the area of the said cross sections remains constant

5. Method for forming a tyre for vehicle wheels according to Claim 1, **characterized in that** said strip-like elements (6) are manufactured by means of drawing.

6. Method for forming a tyre for vehicle wheels according to Claim 1, **characterized in that** said strip-like elements (6) envisage 2 to 6 elongated elements (7) arranged parallel to each other in the longitudinal direction of said strip-like elements (6).

7. Method for forming a tyre for vehicle wheels according to Claim 4, **characterized in that** the ratio K between the length of said base (b) and said height (h) of said strip-like element (6) in the portion not subjected to said constriction step is greater than 1.5.

8. Method for forming a tyre for vehicle wheels according to Claim 1, **characterized in that** the rubberization thickness of each elongated element (7) contained in said strip-like element (6) is between 0.05 mm and 1.5 mm.

9. Tyre for vehicle wheels, comprising at least one carcass structure having one or more carcass plies (2), an annular reinforcing structure associated with said carcass structure, a tread band (4) in a position radially outside said carcass structure, and a pair of sidewalls (5) in axially opposite positions on said carcass structure, said carcass structure comprising a plurality of elongated elements (7), said elongated elements (7) being arranged in a substantially U-shaped configuration around the profile of the cross section of said tyre (1), said carcass structure having two lateral portions which extend substantially in planes perpendicular to the geometrical axis of rotation of the tyre in positions spaced from each other in the axial direction, and a crown portion which extends in a radially external position between said lateral portions, said carcass ply (2) not being folded back around said annular reinforcing structure, the density of said elongated elements (7) being greater in said lateral portions than In said crown portion, said density increasing continuously and regularly from said crown portion towards said lateral portions, **characterized in that** the shape of the cross section of each elongated element (7) remains constant, each elongated element (7) having a side-by-side arrangement along the whole linear extension from bead to bead.

10. Tyre for vehicle wheels according to Claim 9, **characterized in that** said elongated elements (7) comprise a metal cord with the formation 7x4x0.175W.

## Patentansprüche

1. Verfahren zur Herstellung eines Reifens für Fahrzeugräder, wobei der Reifen (1) einen Karkassenaufbau, einen mit dem Karkassenaufbau verbundenen ringförmigen Verstärkungsaufbau, ein Laufflächenband (4) in einer Position radial außen an dem Karkassenaufbau und ein Paar von Seitenwänden (5) in axial gegenüberliegenden Positionen an dem Karkassenaufbau aufweist, und die Fertigung des Karkassenaufbaus wenigstens die Schritte aufweist:
- Vorbereiten einer Vielzahl von streifenförmigen Elementen (6), von denen jedes ein oder mehrere langgestreckte Elemente (7) aufweist, die wenigstens teilweise von wenigstens einer Schicht aus elastomerem Material eingefasst sind,
- Legen eines jeden streifenförmigen Elements (6) auf einen torusförmigen Träger in einer im wesentlichen U-Form um das Profil des Querschnitts des torusförmigen Trägers, um zwei seitliche Abschnitte, die sich im wesentlichen in Ebenen senkrecht zur geometrischen Drehachse des torusförmigen Trägers in Positionen im Abstand voneinander in Axialrichtung erstrecken, und einen Kronenabschnitt zu bilden, der sich in einer radial äußeren Position zwischen den seitlichen Abschnitten er streckt,
- wobei die Kronenabschnitte eines jeden streifenförmigen Elements (6) bezogen aufeinander Seite an Seite längs der Umfangserstreckung des torusförmigen Trägers angeordnet sind,
**gekennzeichnet**
- **durch** einen Schritt, der eine Verengung an den Endzonen eines jeden streifenförmigen Elements (6) vor seinem Ablegen auf dem torusförmigen Träger einschließt, so dass die Nebeneinanderanordnung längs der gesamten linearen Erstreckung von Wulst zu Wulst aufrecht erhalten wird.

2. Verfahren zur Herstellung eines Reifens für Fahrzeugräder nach Anspruch 1, **dadurch gekennzeichnet, dass** die Verengung eine mechanische Verengung mit konstantem Volumen ist.

3. Verfahren zur Herstellung eines Reifens für Fahrzeugräder nach Anspruch 1, **dadurch gekennzeichnet, dass** während des Verengungsschritts die Form des Querschnitts eines jeden langgestreckten Elements (7) unverändert bleibt.

4. Verfahren zur Herstellung eines Reifens für Fahrzeugräder nach Anspruch 2, **dadurch gekennzeichnet, dass** während des Verengungsschritts die Querschnitte der Endzonen jedes streifenförmigen Elements (6) einer Verringerung in ihrer Basis (b) und einer Erhöhung in ihrer Höhe (h) unterliegen, so dass insgesamt die Fläche der Querschnitte konstant bleibt.

5. Verfahren zur Herstellung eines Reifens für Fahrzeugräder nach Anspruch 1, **dadurch gekennzeichnet, dass** die streifenförmigen Elemente (6) mittels Ziehen hergestellt werden.

6. Verfahren zur Herstellung eines Reifens für Fahrzeugräder nach Anspruch 1, **dadurch gekennzeichnet, dass** die streifenförmigen Elemente (6) zwei bis sechs langgestreckte Elemente (7) haben, die parallel zueinander in Längsrichtung der streifenförmigen Elemente (6) angeordnet sind.

7. Verfahren zur Herstellung eines Reifens für Fahrzeugräder nach Anspruch 4, **dadurch gekennzeichnet, dass** das Verhältnis K zwischen der Länge der Basis (b) und der Höhe (h) des streifenförmigen Elements (6) in dem Abschnitt, der nicht dem Verengungsschritt unterworfen wird, größer als 1,5 ist.

8. Verfahren zur Herstellung eines Reifens für Fahrzeugräder nach Anspruch 1, **dadurch gekennzeichnet, dass** die Gummierungsdicke eines jeden langgestreckten Elements (7), das in dem streifenförmigen Element (6) enthalten ist, zwischen 0,05 mm und 1,5 mm beträgt.

9. Reifen für Fahrzeugräder
- mit wenigstens einem Karkassenaufbau, der eine oder mehrere Karkassenlagen (2) aufweist,
- mit einem ringförmigen Verstärkungsaufbau, der mit dem Karkassenaufbau verbunden ist,
- mit einem Laufflächenband (4) in einer Position radial außen an dem karkassenaufbau und
- mit einem Paar von Seitenwänden (5) in axial gegenüberliegenden Positionen an dem Karkassenaufbau,
- wobei der Karkassenaufbau
-- eine Vielzahl von langgestreckten Elementen (7), die mit einer im wesentlichen U-Form um das Profil des Querschnitts des Reifens (1) angeordnet sind,
-- zwei seitliche Abschnitte, die sich im wesentlichen in Ebenen senkrecht zur geometrischen Drehachse des Reifens in in der Axialrichtung voneinander beabstandeten Positionen erstrecken, und
-- einen Kronenabschnitt aufweist, der sich in einer radial äußeren Position zwischen den seitlichen Abschnitten erstreckt,
- wobei die Karkassenlage (2) nicht um den ringförmigen Verstärkungsaufbau herum gefaltet ist,
- wobei die Dichte der langgestreckten Elemente (7) in den seitlichen Abschnitten größer als in dem Kronenabschnitt ist und
- wobei die Dichte von dem Kronenabschnitt zu den seitlichen Abschnitten hin fortlaufend und regelmäßig zunimmt,
**dadurch gekennzeichnet,**
- **dass** die Form des Querschnitts eines jeden langgestreckten Elements (7) konstant bleibt,
- wobei jedes langgestreckte Element (7) längs der gesamten linearen Erstreckung von Wulst zu Wulst eine Nebeneinanderanordnung aufweist.

10. Reifen für Fahrzeugräder nach Anspruch 9, **dadurch gekennzeichnet, dass** die langgestreckten Elemente (7) einen Metallkord mit der Formation 7×4×0,175W aufweisen.

## Revendications

1. Procédé de formation d'un pneu pour roues de véhicule, ledit pneu (1) comprenant une structure de carcasse, une structure de renforcement annulaire associée à ladite structure de carcasse, une bande de roulement (4) en une position radialement à l'extérieur de ladite structure de carcasse, et une paire de flancs (5) en des positions axialement opposées sur ladite structure de carcasse, où la fabrication de ladite structure de carcasse comprend au moins les étapes consistant à : préparer une pluralité d'éléments en bande (6) comprenant chacun un ou plusieurs éléments allongés (7) au moins partiellement recouverts d'au moins une couche de matériau élastomère, déposer chaque élément en bande (6) sur un support toroïdal en une configuration substantiellement en U autour du profil de la section transversale dudit support toroïdal afin de définir deux parties latérales qui s'étendent substantiellement dans des plans perpendiculaires à l'axe géométrique de rotation dudit support toroïdal dans des positions espacées les unes des autres dans la direction axiale, et une partie sommet qui s'étend en une position radialement extérieure entre lesdites parties latérales, lesdites parties sommets de chaque élément en bande (6) étant agencées côte à côte les unes par rapport aux autres le long de l'étendue circonférentielle du support toroïdal, **caractérisé en ce qu'**il prévoit une étape impliquant le rétrécissement des zones d'extrémité de chaque élément en bande (6), avant la pose de celles-ci sur ledit support toroïdal de manière telle que ledit agencement côte à côte est maintenu sur toute l'étendue linéaire, d'un talon à l'autre.

2. Procédé de formation d'un pneu pour roues de véhicule selon la revendication 1, **caractérisé en ce que** ledit rétrécissement est un rétrécissement mécanique à volume constant.

3. Procédé de formation d'un pneu pour roues de véhicule selon la revendication 1, **caractérisé en ce que**, au cours de ladite étape de rétrécissement, la forme de la section transversale de chaque élément allongé (7) reste inchangée.

4. Procédé de formation d'un pneu pour roues de véhicule selon la revendication 2, **caractérisé en ce que**, au cours de ladite étape de rétrécissement, les sections transversales des zones d'extrémité de chaque élément en bande (6) subissent une réduction de leur base (b) et une augmentation de leur hauteur (h), de sorte que, au final, l'aire desdites sections reste constante.

5. Procédé de formation d'un pneu pour roues de véhicule selon la revendication 1, **caractérisé en ce que** lesdits éléments en bande (6) sont fabriqués au moyen d'un procédé d'étirage.

6. Procédé de formation d'un pneu pour roues de véhicule selon la revendication 1, **caractérisé en ce que** lesdits éléments en bande (6) prévoient de 2 à 6 éléments allongés (7) placés parallèlement entre eux dans la direction longitudinale desdits éléments en bande (6).

7. Procédé de formation d'un pneu pour roues de véhicule selon la revendication 4, **caractérisé en ce que** le rapport K entre la longueur de ladite base (b) et ladite hauteur (h) dudit élément en bande (6), dans la partie non soumise à ladite étape de rétrécissement, est supérieur à 1,5.

8. Procédé de formation d'un pneu pour roues de véhicule selon la revendication 1, **caractérisé en ce que** l'épaisseur de caoutchoutage de chaque élément allongé (7) contenu dans ledit élément en bande (6) est comprise entre 0,05 mm et 1,5 mm.

9. Pneu pour roues de véhicule, comprenant au moins une structure de carcasse comportant une ou plusieurs nappes (2) de carcasse, une structure de renforcement annulaire associée à ladite structure de carcasse, une bande de roulement (4) en une position radialement à l'extérieur de ladite structure de carcasse, et une paire de flancs (5) en des positions axialement opposées sur ladite structure de carcasse, ladite structure de carcasse comprenant une pluralité d'éléments allongés (7), lesdits éléments allongés (7) étant agencés en une configuration substantiellement en U autour du profil de la section transversale dudit pneu (1), ladite structure de carcasse comportant deux parties latérales qui s'étendent substantiellement dans des plans perpendiculaires à l'axe géométrique de rotation du pneu dans des positions espacées les unes des autres dans la direction axiale, et une partie sommet qui s'étend en une position radialement extérieure entre lesdites parties latérales, ladite nappe (2) de carcasse n'étant pas repliée autour de ladite structure de renforcement annulaire, la densité desdits éléments allongés (7) étant plus grande dans lesdites parties latérales que dans ladite partie sommet, ladite densité augmentant de façon continue et régulière de ladite partie sommet vers lesdites parties latérales, **caractérisé en ce que** la forme de la section transversale de chaque élément allongé (7) reste constante, chaque élément allongé (7) ayant un agencement côte à côte le long de toute l'étendue linéaire, d'un talon à l'autre.

10. Pneu pour roues de véhicule selon la revendication 9, **caractérisé en ce que** lesdits éléments allongés (7) comprennent un câble métallique présentant la configuration 7×4×0,175W.
